# EUROPEAN PATENT APPLICATION

(11) **EP 1 584 580 A1**
(43) Date of publication of application: **12.10.2005**
(21) Application number: 05251189.6
(22) Date of filing: 28.02.2005
(51) Int. Cl.: B65G 15/00, B65G 21/06

(54) **Method and device for mounting and removing an endless conveyor belt**

(30) Priority: 01.03.2004 GB 0404526
(71) Applicant: R.J. Herbert Engineering Limited, Cambridgeshire PE14 8JT (GB)
(72) Inventor: Herbert, Roderick Joseph c/o R J Herbert Engin.Ltd, Wisbech Cambridgeshire PE14 8JT (GB); Woollard, Martin, Wisbech Cambs PE13 4XE (GB)
(74) Representative: Chave, Lynne Fiona

(57) **Abstract**

Conveying apparatus (10) wherein elements comprising the apparatus are of modular construction and are adapted to facilitate disassembly and reassembly of the apparatus as required to facilitate access to the conveyor assembly, particularly the belt (34), to enable removal and replacement of the belt quickly and without the need for on-site vulcanisation thereby significantly reducing the down time of the apparatus.

## Description

This invention relates to a method and apparatus for conveying articles such luggage in an airport environment. However, the invention is equally applicable to the conveyance of letters and parcels, containers, trays, recyclable material and a bulk raw vegetable crop.

Conveying apparatus is frequently used for the movement of bulk items and in applications where heavy duty and often constant use is required. The principle of operation is that a belt is turned by a drive roller inside the belt and the articles such as luggage transverses the top strand of the belt and travels as the belt travels. It is important that such apparatus be as reliable as possible and "down time" when the conveyor is out of action due to difficulties with the belt, such as replacing it, is reduced to a minimum as in circumstances where the articles being transported is luggage, say at an airport, this would cause considerable disruption.

Although various conveyors have been developed, they suffer from the disadvantage that is a difficult and time consuming job to carry out maintenance, particularly the repair or replacement of the belt. Accordingly, we have identified the need for improvements in this respect or generally.

According to the invention there is provided conveying apparatus which provides improvements with regard to repair and maintenance to reduce the amount of downtime required.

In an embodiment of the invention there is provided conveying apparatus wherein elements comprising the apparatus are of modular construction and are adapted to facilitate disassembly and reassembly of the apparatus as required to facilitate access to the conveyor assembly.

The apparatus comprises a support frame assembly, typically constructed from steel or a similar suitable material. The frame is provided with heavy duty castors and self-levelling adjustable feet. The provision of castors ensures that the conveyor is highly manoeuvrable. The support frame assembly carries a conveyor frame assembly around which a conveyor belt runs.

The conveyor frame assembly is secured to the support frame by support means. These include support means located at either side of the frame and which may be adapted to be modular being removable and replaceable as required. The removal of these support means facilitates access to the conveyor frame assembly.

The conveyor frame assembly comprises side members between which is located a strengthening flat. The side members are angled such that a portion of the side member is substantially vertical and a portion is substantially horizontal. The strengthening flat is secured to the horizontally extending portions of the side members such that it extends between them. Beneath the strengthening flat the conveyor frame assembly is provided with cross members which extend between and are secured to the substantially vertical portions of the side members. These provide the conveyor frame assembly with additional strength.

Side panels are provided which drop into apertures which are formed on the conveyor frame assembly to combat bounce in use and to retain articles on the conveyor preventing them from sliding off the belt. These panels are modular, being designed to be removed and replaced as necessary.

At one end of the conveyor frame assembly there is provided a drive roller with a tail roller being provided at the other end. The drive roller is motorised using a suitable drive motor, however this could be replaced by an internally motorised drum. A belt is located over the conveyor frame assembly and the drive and tail rollers such that the rollers are inside the loop formed by the belt. The belt is driven by the drive rollers as a result of friction contact between the roller and the underside of the belt. The drive roller may also be crowned to help retain the belt in the required working position. In addition, the drive roller and tail roller are wider than the belt. This assists to maintain correct tracking of the belt.

Attached to the side members of the conveyor frame assembly are a plurality, generally four, of mounting means for two snub rollers which are located behind the drive and tail rollers and on the outside of the conveyor belt. The snub rollers are provided with a lug or projection at either end which is received in a corresponding notch formed in a mounting plate to retain them in the required position relative to the drive and tail rollers and the conveyor belt. The tracking of the conveyor belt is affected by the snub rollers acting on the return side of the conveyor belt. The snub rollers also act to retain the conveyor belt in the required position. The mounting means for the snub rollers and the construction of the rollers enable them to be removed and replaced as required by hand without the need for specialised tools. Furthermore, the design of the mounting means enables the snub rollers to be replaced without the need for extensive adjustment or re-calibration. Belt tracking adjustment means are also provided which can adjust snub rollers to take account of the angle of drive if required. The conveyor frame assembly is also provided with a sliding bed which supports the belt in operation.

The position of the tail roller relative to the conveyor frame assembly can be altered to either bring it closer to the frame or move it further away. The position of the tail roller can be altered in this way to either increase' or decrease the tension applied to the conveyor belt. The movement of the tail roller is facilitated by having the tail roller mounted on retractable brackets that are driven by a hand wheel or a winding handle through a reduction gear box/cross helical gear box which screws the roller mounts in or out depending on the direction of the handle rotation and causes the supports on which the tail roller is mounted to move within a shaft secured to the inside of the substantially upright portion of side member. As the roller is caused to move either closer to or further away from the conveyor frame assembly, the sliding bed is also caused to follow this movement such that the area of support for the conveyor when in use is also adjusted.

In the event the belt becomes damaged during use, the operator can access the belt from the side of a machine, generally the side which does not carry the motor. The side panel can be removed and the tail roller is retracted. Once retracted the slack in the belt allows the snub rollers to be removed from their mounting bracket. Once the snub rollers are removed the belt will hang down. The support means between the support frame and the conveyor frame assembly on that same side are then removed. On removal of these support means, the conveyor frame assembly is supported by the frame from one side only being held in a cantilever position. When the conveyor is hanging from the cantilever support the belt can then be pulled off through the open side.

In an embodiment of the invention there is also provided a method of accessing conveying apparatus to facilitate removal of the belt.

The method comprises the step of removing a side panel from the conveyor frame assembly, the further step of retracting the tail roller, the still further step of removing the snub rollers thereby enabling the belt to hang down, the step of removing the support means between the support frame and the conveyor frame assembly on that same side such that the conveyor frame assembly is supported by the frame from one side only being held in a cantilever position and the step of pulling the belt through the open side.

Refitting is the reverse of removal, and the tracking may be checked and adjusted as necessary when the new belt is fitted.

By creating a conveyor system which has a modular capacity, which may be accessed from the side for maintenance, thereby enabling the conveyor frame assembly to be retained in a cantilevered attitude, this enables a conveyor apparatus to be maintained very quickly and in particular permits the fast and easy changing and replacing of a belt which can be achieved without the need to split a belt to remove it or re-join a belt once fitted. This reduced the down time of the conveyor thereby reducing attendant comsttercial losses. In addition, the invention avoids expensive on-site vulcanisation often associated with the conveyor industry today.

An embodiment of the invention will now be described, by way of example only, with reference to the following illustrative figures in which:
Figure 1 is a perspective view of the conveyor apparatus from above and one side;
Figure 2 is a perspective view of the conveyor apparatus from below and the other side;
Figure 3 is a perspective view of the support frame assembly of the conveyor apparatus;
Figure 4 is a perspective view of the strengthening flat of the conveyor apparatus;
Figure 5 is a perspective view of part of the conveyor frame assembly from below;
Figure 6 is a perspective view of part of the conveyor frame assembly from below showing the rollers;
Figure 7 is a perspective view of part of the conveyor frame assembly;
Figure 8 is a perspective detailed view of part of the conveyor apparatus;
Figure 9 is a perspective view of part of the conveyor apparatus after disassembly showing removal of the belt

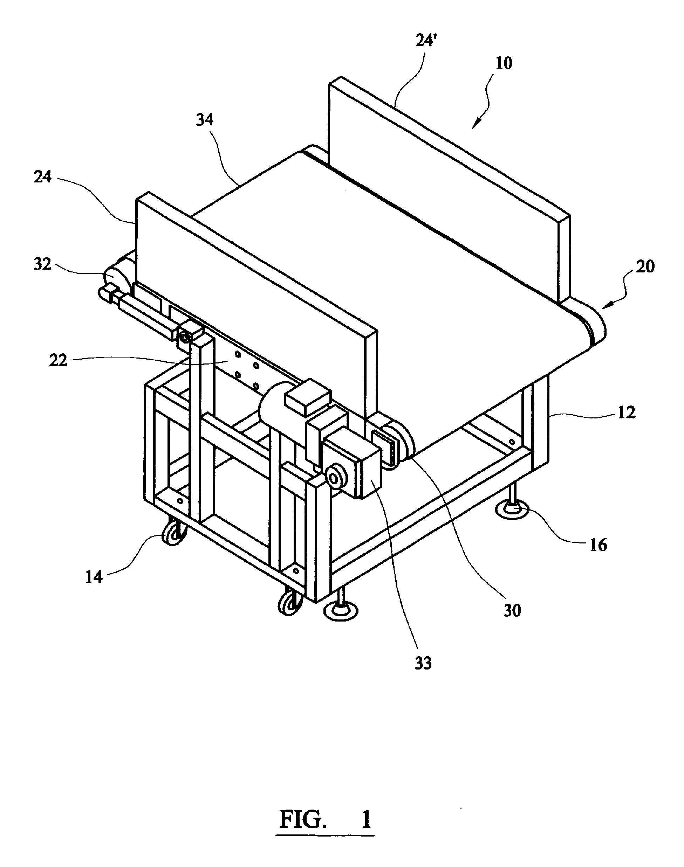

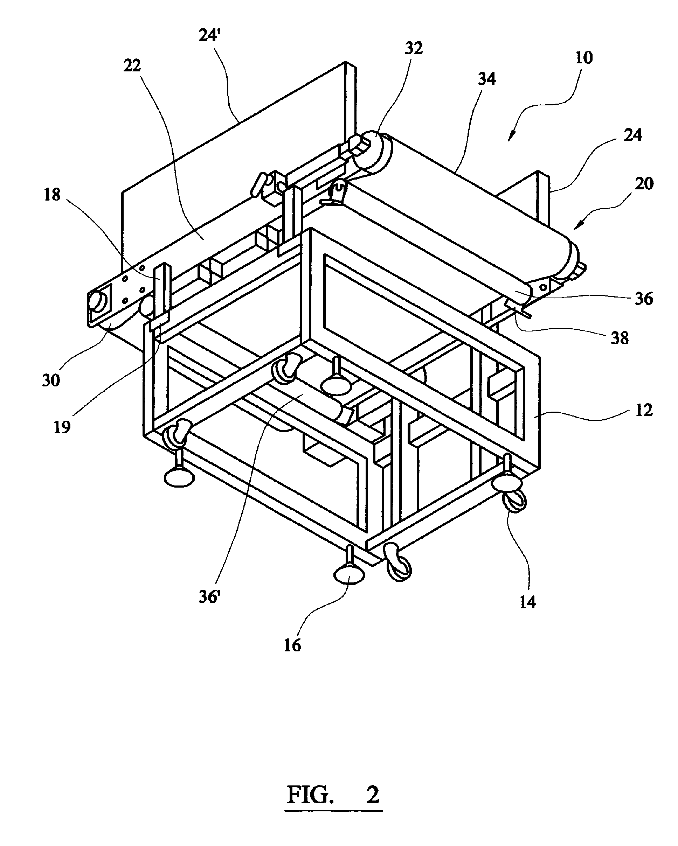

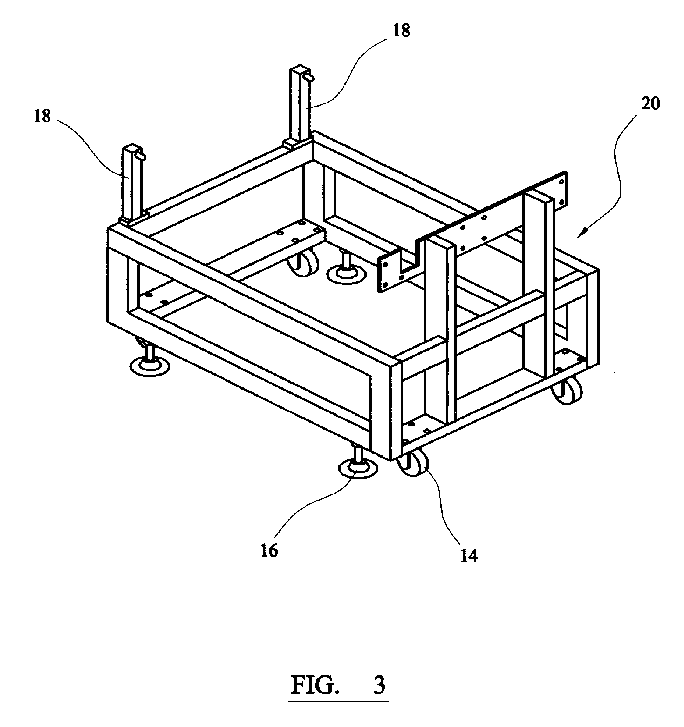

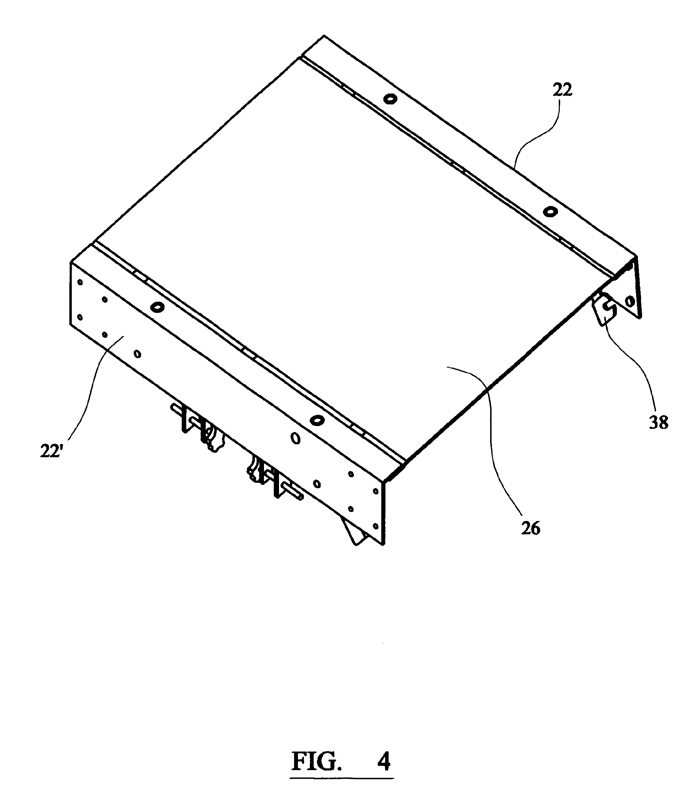

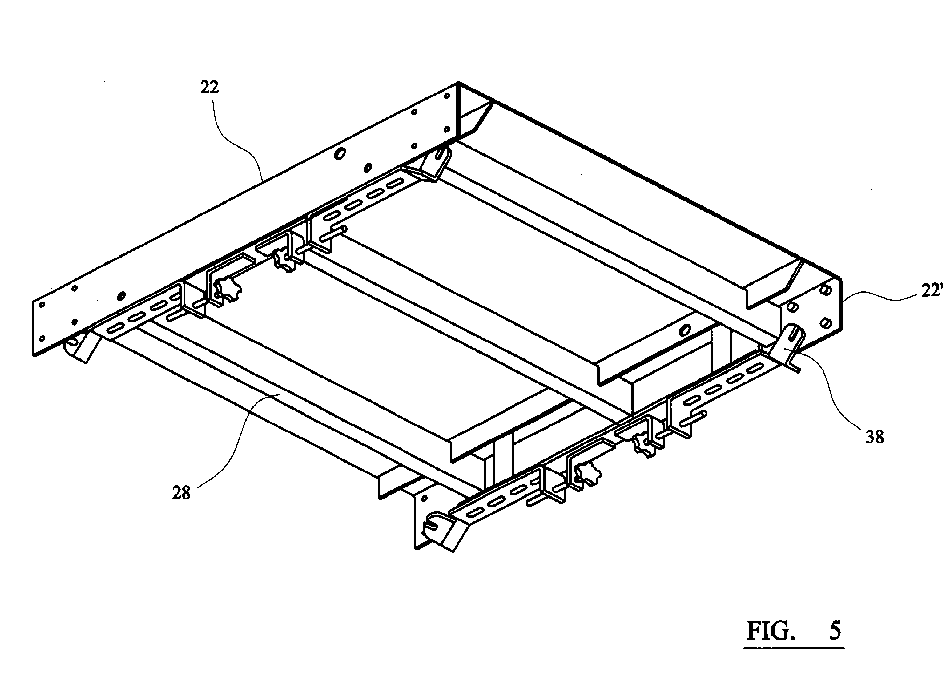

As can be seen in Figures 1, 2 and 3 conveyor apparatus 10 comprises a support frame assembly 12. The frame is provided with heavy duty castors 14 and self levelling adjustable feet 16. The frame has upwardly extending support means 18 which have formed with a bracket 19 at one end which is used to secure the support means 18 to the frame 12 together with suitable fixing means such as bolts. At the other end, the support means 18 are secured to the conveyor frame assembly 20. Said support means are removable and replaceable as required. The conveyor frame assembly 20 has two side members 22 and 22' which run on either side. The side members are angled such a portion of the side portion is substantially horizontal and a portion is substantially vertical. The horizontal portion is formed with apertures into which are received side panels 24, 24'. These are then bolted into position but can be removed and replaced as required. Located between the side members is a strengthening flat 26 as shown in Figure 4 which is secured to the horizontally extending portions of the side members 22 22'. Beneath the strengthening flat 26, the conveyor frame assembly 20 is provided with further strengthening means in the form of cross members 28 as can be seen in Figure 5.

As shown in Figures 1, 2 and 6 a drive roller 30 is located at one end of the conveyor frame assembly 20 and a tail roller 32 at the other end. The drive roller 30 is driven by a motor 33 typically although not exclusively being helical bevel, 1.1Kw, 102rpm 3 phase, 50 Hz being shaft mounted with shrink disc fitting and a quick power supply via a Hartling connection. A belt 34, which is joined at the end to form a continuous loop, is located around the conveyor frame assembly 20 and rollers 30,32 such that the rollers 30,32 are located inside the loop. The belt 34 may be formed from flame retardant PVC or similar material. The belt 34 is driven by the drive roller 30 as a result of friction contact between the roller 30 and the belt 34.

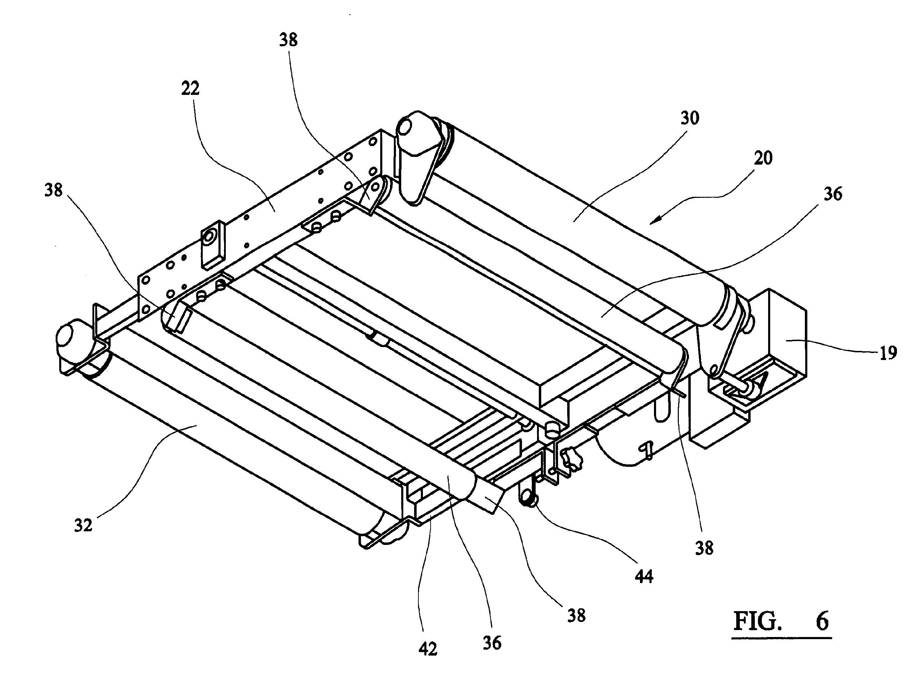

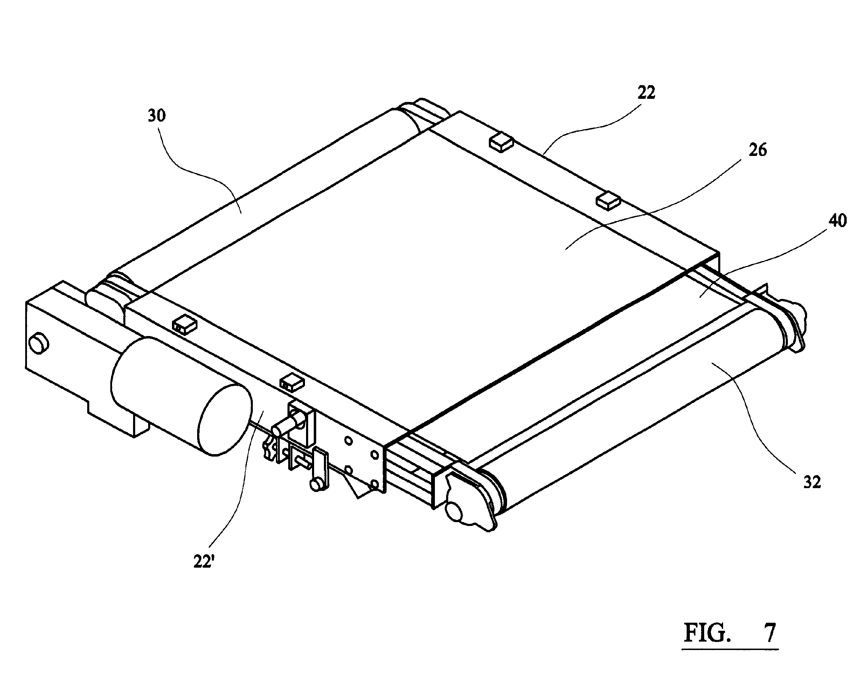

As can be seen in Figure 6 snub rollers 36 36=are provided which are close to the drive and tail rollers, 30,32. These are retained in the required position by mounting plates 38 secured to the side members 22, 22= and act on the return side of the belt 34. The snub rollers 36, 36= act to maintain the position of the belt 34 and affect the tracking of the belt 34. The belt 34 is supported in use by a sliding bed 40 as shown in Figure 7.

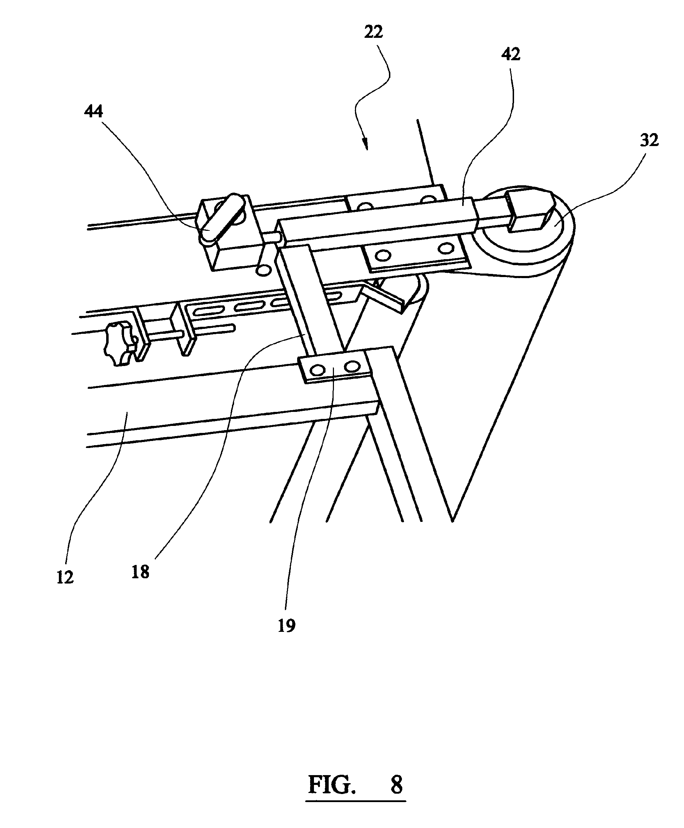

The position of the tail roller 30 relative to the conveyor frame assembly 20 can be altered to either bring it closer to the frame 20 or move it further away. The position of the tail roller 30 can be altered in this way to either increase or decrease the tension applied to the conveyor belt 34. The movement of the tail roller 30 is facilitated by having the tail roller 30 mounted on retractable brackets 42 that are driven by a hand wheel or a winding handle 44 as shown in Figure 8 through a reduction gear box/cross helical gear box which screws the roller mounts in or out depending on the direction of the handle rotation. As the roller 30 is caused to move either closer to or further away from the conveyor frame assembly 20, the sliding bed 44 is also caused to follow this movement such that the area of support for the belt, when in use, is also adjusted.

In the event the belt 34 becomes damaged during use, the operator can access the belt 34 from the side of the conveyor 10, generally the side which does not carry the motor. The retaining bolts holding the modular side panel 22 in position are loosened and the side panel 22 is removed. The tail roller 30 is then retracted which serves to de-tension and slacken the belt. Once retracted the slack in the belt allows the snub rollers to be removed from their mounting bracket. Once the snub rollers are removed the belt will hang down.

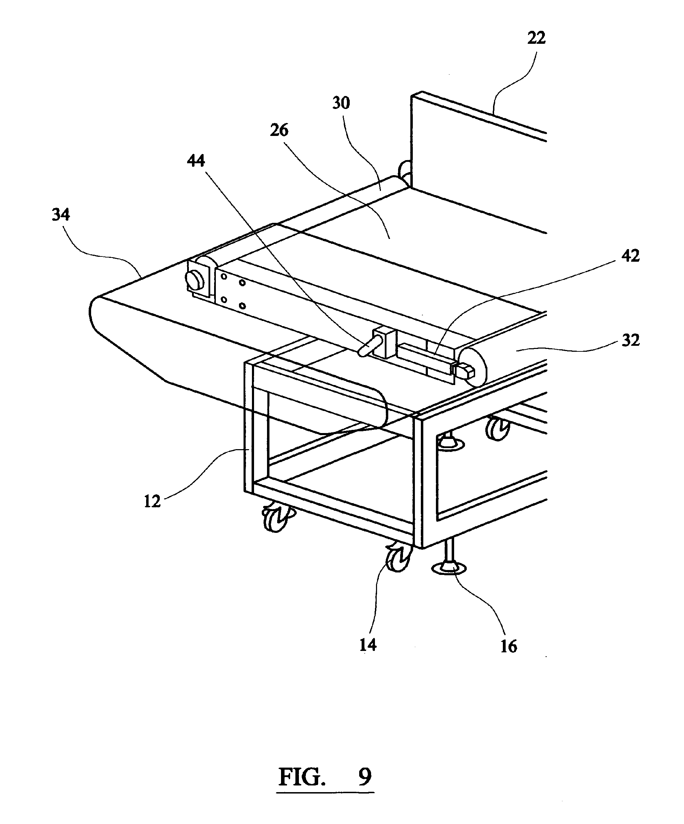

The support means 18 between the support frame 10 and the conveyor frame assembly 20 on that same side are then removed. On removal of these support means 18, the conveyor frame assembly 20 is supported by the frame 10 from one side only being held in a cantilever position. When the conveyor frame assembly 20 is hanging from the cantilever support the belt 34 can then be pulled off through the open side as shown in Figure 9.

## Claims

1. Conveying apparatus wherein elements comprising the apparatus are of modular construction and are adapted to facilitate disassembly and reassembly of the apparatus as required.

2. Conveying apparatus according to claim 1 wherein said disassembly and reassembly of the apparatus is partial to facilitate access as required.

3. Conveying apparatus according to claim 2 wherein a conveyor frame assembly is secured to and supported by a support frame assembly.

4. Conveying apparatus according to claim 3 wherein said conveyor frame assembly is secured to said support frame assembly by support means which are removably replaceable.

5. , Conveying apparatus according to claim 3 wherein said support frame is adapted to support said conveyor frame assembly from one side thereby retaining said conveyor frame assembly in a cantilevered attitude.

6. Conveying apparatus according to claim 4 or claim 5 wherein said support frame is adapted to support said conveyor frame assembly from one side after removal of said support means thereby retaining said conveyor frame assembly in a cantilevered attitude.

7. Conveying apparatus according to any of the previous claims wherein said conveyor frame assembly comprises side panels, a drive roller, a tail roller, snub rollers, a strengthening flat and a belt.

8. Conveying apparatus according to claim 7 wherein said side panels are removably replaceable.

9. Conveying apparatus according to claim 7 wherein said snub rollers are removably replaceable.

10. Conveying apparatus according to claim 7 wherein the position of said tail roller may be changed relative to the drive roller.

11. Conveying apparatus according to claim 10 wherein changing the position of the tail roller relative to the drive roller facilitates tensioning and de-tensioning of the belt.

12. Conveying apparatus according to claim 11 wherein said belt may be removed without the need for cutting by pulling it off through the open side created by retaining the conveyor frame assembly in a cantilevered attitude.

13. A method of removing a belt from conveying apparatus comprising the steps of providing conveying apparatus, said apparatus being of modular construction, the further step of removal of the modular elements to facilitate access to the belt and the step of removing the belt.

14. A method of removing a belt from conveying apparatus comprising the step of removing a side panel from the conveyor frame assembly, the further step of retracting the tail roller, the still further step of removing the snub rollers thereby enabling the belt to hang down, the step of removing the support means between the support frame and the conveyor frame assembly on that same side such that the conveyor frame assembly is supported by the frame from one side only being held in a cantilever position and the step of pulling the belt through the open side.
